# EUROPEAN PATENT SPECIFICATION

(11) **EP 4 564 058 B1**
(45) Date of publication and mention of the grant of the patent: **30.09.2026**
(21) Application number: 22958043.6
(22) Date of filing: 05.09.2022
(51) Int. Cl.: G01S 7/35, G01S 7/41, G01S 13/34, G01S 13/42, G01S 13/86, G01S 13/87

(54) **SIGNAL ANALYSIS DEVICE, CONTROL CIRCUIT, STORAGE MEDIUM, AND SIGNAL ANALYSIS METHOD**
SIGNALANALYSEVORRICHTUNG, STEUERSCHALTUNG, SPEICHERMEDIUM UND SIGNALANALYSEVERFAHREN
DISPOSITIF D'ANALYSE DE SIGNAL, CIRCUIT DE COMMANDE, SUPPORT DE STOCKAGE ET PROCÉDÉ D'ANALYSE DE SIGNAL

(43) Date of publication of application: 04.06.2025
(73) Proprietor: MITSUBISHI ELECTRIC CORPORATION, Chiyoda-ku Tokyo 100-8310 (JP)
(72) Inventor: AKIYAMA, Yuji, Tokyo 100-8310 (JP)
(74) Representative: Pfenning, Meinig & Partner mbB
(86) International application number: PCT/JP2022/033281
(87) International publication number: WO 2024/052962

(56) References cited:
- WO-A1-2019/215734
- WO-A1-2020/208627
- JP-A- 2011 149 805
- JP-A- 2016 507 718
- US-A1- 2019 179 007
- US-A1- 2021 041 555

## Description

### Field

The present disclosure relates to a signal analysis device, a control circuit, a storage medium, and a signal analysis method, which perform signal processing on a reception signal.

### Background

Three-dimensional shapes of objects are estimated conventionally by three-dimensional multi-input multi-output (3D-MIMO) processing on signals received by antenna arrays. In order that 3D-MIMO processing provides a high-resolution three-dimensional shape from a broadband radio frequency (RF) signal, a signal processing load unfortunately significantly increases because it is necessary to solve a large-scale problem of estimating, from a large number of array reception signals, reflectance values at numerous grid points representing the reflectance distribution of a three-dimensional object. To address such a problem, Patent Literature 1 discloses a method of reducing the signal processing load. This method, which is based on the assumption that the reflectance distribution is sparse, measures a coarse existing location of an object, using an optical camera, and performs processing on the basis of information on the coarse existing location of the object.

WO 2019/215734 A1 discloses a MIMO FMCW radar configured to perform a Fourier transform over the fast time dimension to obtain coarse range-slow time data; a modified Fourier transform is then performed in the slow time dimension to obtain a fine range-Doppler map.

### Citation List

### Patent Literature

Patent Literature 1: U.S. Patent Application Publication No. 2016/0291148

### Summary of Invention

### Problem to be solved by the Invention

The foregoing conventional technology, which performs the processing on the assumption that the reflectance distribution is sparse, presents a problem of being inapplicable where a sparse estimation is difficult, among other things, where the reflectance, the emitted RF power, etc. is ranged widely or the object has a complex shape.

The present disclosure has been made in view of the foregoing, and it is an object of the present disclosure to provide a signal analysis device, a control circuit, a storage medium and a signal analysis method capable of reducing the load of performing signal processing on a reception signal.

### Means to Solve the Problem

The above mentioned problem is solved by the signal analysis device, the control circuit, the storage medium and the signal analysis method according to the claims. To solve the above problem and achieve the object, a signal analysis device according to the present disclosure comprises: a transmission unit to modulate a plurality of chirp signals synchronized with one another, and transmit the modulated signals from a plurality of transmission antennas toward an observation area; a reception unit to: receive, with a plurality of reception antennas, signals transmitted from the transmission unit and passed through the observation area; mix the chirp signals with reception signals received with the plurality of reception antennas to generate a plurality of baseband signals, one for each reception antenna; and convert each of the plurality of baseband signals from analog signals to digital signals; and a reception processing unit to: convert each of the plurality of baseband signals that are digital signals resulting from the conversion, from values in a time domain into values in a frequency domain; combine, for each of the converted baseband signals, a plurality of values in the frequency domain on a per predetermined frequency range basis to thereby convert the plurality of values in the frequency domain into values smaller in number than the plurality of values in the frequency domain; to estimate a coarse reflectance distribution in the observation area, using the smaller number of values; and to estimate a reflectance distribution with respect to the observation area, using the coarse reflectance distribution as an initial value of iterative estimation processing, the reflectance distribution being more precise than the coarse reflectance distribution.

### Effects of the Invention

A signal analysis device according to the present disclosure provides an advantage in capability of reducing the load of performing signal processing on a reception signal.

### Brief Description of Drawings

FIG. 1 is a diagram illustrating an exemplary configuration of a signal analysis device according to a first embodiment.
FIG. 2 is a diagram illustrating an exemplary configuration of a reception processing unit of the signal analysis device according to the first embodiment.
FIG. 3 is a diagram illustrating an exemplary configuration of a binning unit included in the reception processing unit of the signal analysis device according to the first embodiment.
FIG. 4 is a chart illustrating an example in which the reception processing of the reception processing unit of the signal analysis device according to the first embodiment produces an effect of reducing the number of convergences in the iterative fine estimation.
FIG. 5 is a chart illustrating an example in which the reception processing of the reception processing unit of the signal analysis device according to the first embodiment produces an effect of reducing convergence time.
FIG. 6 is a chart illustrating an example in which the reception processing of the reception processing unit of the signal analysis device according to the first embodiment produces an effect of reducing estimation error.
FIG. 7 is a chart illustrating an example in which the reception processing of the reception processing unit of the signal analysis device according to the first embodiment produces an effect of improving estimation SNR.
FIG. 8 is a flowchart illustrating an operation of the signal analysis device according to the first embodiment.
FIG. 9 is a diagram illustrating an exemplary configuration of processing circuitry implementing the signal analysis device according to the first embodiment when the processing circuitry is implemented by a processor and a memory.
FIG. 10 is a diagram illustrating an example of processing circuitry implementing the signal analysis device according to the first embodiment when the processing circuitry is configured using a dedicated hardware element.
FIG. 11 is a diagram illustrating an exemplary configuration of a signal analysis device 100a according to a second embodiment.
FIG. 12 is a diagram illustrating an exemplary configuration of a signal analysis device 100b according to the second embodiment.
FIG. 13 is a diagram illustrating an exemplary configuration of a signal analysis device according to a third embodiment.
FIG. 14 is a first diagram illustrating an exemplary configuration of a reception processing unit of the signal analysis device according to the third embodiment.
FIG. 15 is a second diagram illustrating an exemplary configuration of the reception processing unit of the signal analysis device according to the third embodiment.

### Description of Embodiments

A signal analysis device, a control circuit, a storage medium, and a signal analysis method according to embodiments of the present disclosure will be described in detail below with reference to the drawings.

### First Embodiment.

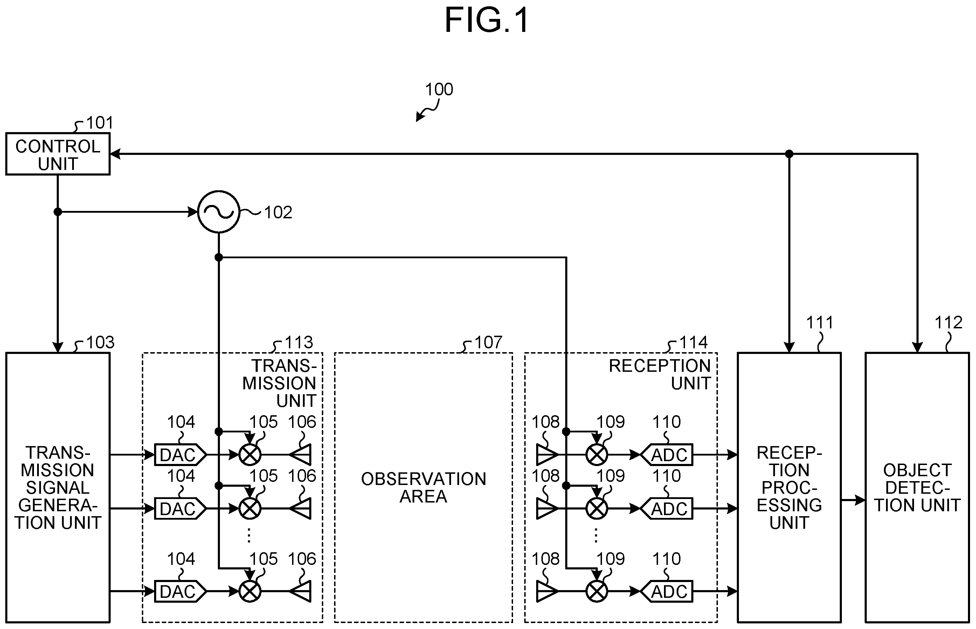

FIG. 1 is a diagram illustrating an exemplary configuration of a signal analysis device 100 according to a first embodiment. The signal analysis device 100 includes a control unit 101, a chirp signal generation unit 102, a transmission signal generation unit 103, multiple digital-to-analog converters (DACs) 104, multiple mixers 105, multiple transmission antennas 106, multiple reception antennas 108, multiple mixers 109, multiple analog-to-digital converters (ADCs) 110, a reception processing unit 111, and an object detection unit 112. The signal analysis device 100 includes a transmission unit 113 and a reception unit 114. The transmission unit 113 is defined by the multiple DACs 104, the multiple mixers 105, and the multiple transmission antennas 106. The reception unit 114 is defined by the multiple reception antennas 108, the multiple mixers 109, and the multiple ADCs 110. Note that the number of the DACs 104 and the number of the mixers 105 are identical to the number of the transmission antennas 106, and the number of the mixers 109 and the number of the ADCs 110 are identical to the number of the reception antennas 108. The number of the transmission antennas 106 may be identical to, or different from, the number of the reception antennas 108.

The control unit 101 controls operation of the signal analysis device 100. Specifically, the control unit 101 controls operation such as generation of a high-frequency chirp signal by the chirp signal generation unit 102, generation of a transmission signal by the transmission signal generation unit 103, reception processing performed by the reception processing unit 111, and detection of an object by the object detection unit 112. Note that the control unit 101 may communicate with an external device not illustrated and control operation of the signal analysis device 100 on the basis of an instruction from the external device or the like.

Under control of the control unit 101, the chirp signal generation unit 102 generates multiple high-frequency chirp signals synchronized with one another, and outputs the high-frequency chirp signals to the multiple mixers 105 and the multiple mixers 109. The high-frequency chirp signal generated by the chirp signal generation unit 102 may be an up-chirp signal having its frequency increasing over time, or a down-chirp signal having its frequency decreasing over time. In addition, the high-frequency chirp signal generated by the chirp signal generation unit 102 may be a continuous chirp signal having its frequency continuously swept, a step chirp signal having its frequency varying discontinuously in a stepwise manner, or a frequency hopping signal having its frequency varying discontinuously more irregularly. The high-frequency chirp signals may each hereinafter be referred to simply as chirp signal.

In the signal analysis device 100, the control unit 101 controls operation of the chirp signal generation unit 102 to thereby distribute the high-frequency chirp signals to the transmission unit 113 and the reception unit 114. The chirp signal generation unit 102 is an oscillator for generating the high-frequency chirp signals.

The transmission signal generation unit 103 generates a transmission signal, which is a digital signal, under control of the control unit 101, and outputs the transmission signal to the multiple DACs 104.

The multiple DACs 104 each convert the digital signal, i.e., the transmission signal generated by the transmission signal generation unit 103, to an analog signal.

The multiple mixers 105 are each connected to a corresponding one of the DACs 104, and the chirp signal generation unit 102. Each of the multiple mixers 105 modulates the high-frequency chirp signal generated by the chirp signal generation unit 102, using the transmission signal that is the analog signal obtained by the conversion performed by the DAC 104.

The multiple transmission antennas 106 are each connected to a corresponding one of the mixers 105. Each of the multiple transmission antennas 106 transmits, toward an observation area 107, the chirp signal modulated by the mixer 105. Note that although not illustrated, the signal analysis device 100 amplifies the chirp signals as appropriate, using an amplifier or the like before the chirp signals are transmitted from the transmission antennas 106.

The multiple reception antennas 108 individually receive signals transmitted from the multiple transmission antennas 106 and scattered and/or absorbed in the observation area 107. Note that although not illustrated, using an amplifier or the like, the signal analysis device 100 amplifies the signals received by the reception antennas 108, as appropriate.

The multiple mixers 109 are each connected to a corresponding one of the reception antennas 108, and the chirp signal generation unit 102. Each of the multiple mixers 109 mixes the signal received by the reception antenna 108 with the high-frequency chirp signal generated by the chirp signal generation unit 102 and generates a baseband reception signal.

The multiple ADCs 110 are each connected to a corresponding one of the mixers 109. Each of the multiple ADCs 110 converts the baseband reception signal generated by the mixer 109, from an analog signal to a digital signal.

Under control of the control unit 101, the reception processing unit 111 performs signal processing and the like on the multiple reception signals that are digital signals obtained by conversion performed by the multiple respective ADCs 110.

Under control of the control unit 101, for example, the object detection unit 112 detects an object in the observation area 107, using a signal that has undergone signal processing in the reception processing unit 111.

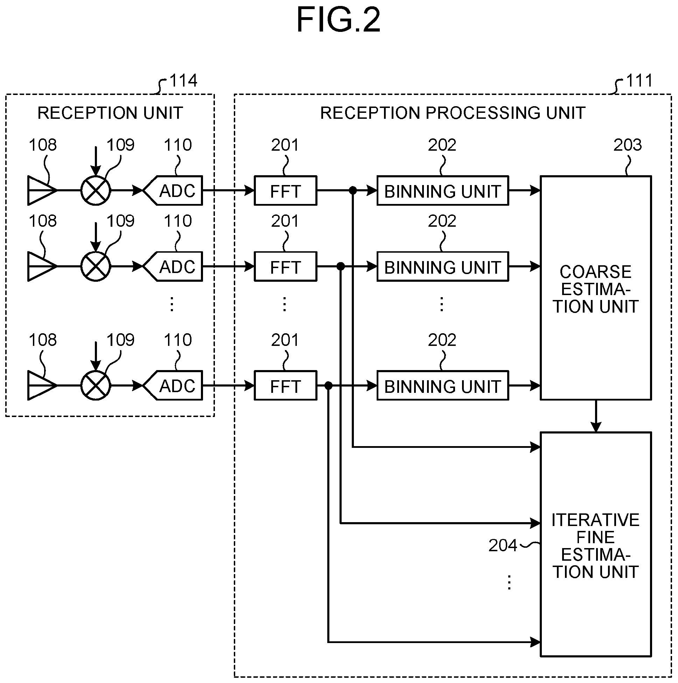

A configuration of the reception processing unit 111 will next be described in detail. FIG. 2 is a diagram illustrating an exemplary configuration of the reception processing unit 111 of the signal analysis device 100 according to the first embodiment. The reception processing unit 111 includes multiple fast Fourier transform (FFT) units 201, multiple binning units 202, a coarse estimation unit 203, and an iterative fine estimation unit 204. Note that the number of the FFT units 201 and the number of the binning units 202 are identical to the number of the reception antennas 108, i.e., the number of the mixers 109 and the number of the ADCs 110.

The multiple FFT units 201 are each connected to a corresponding one of the ADCs 110. Each of the FFT units 201 converts a reception signal from a value in the time domain into a value in the frequency domain. The reception signal that is a digital signal obtained by the conversion performed by the ADC 110.

The multiple binning units 202 are each connected to a corresponding one of the FFT units 201. Each of the binning units 202 combines the larger number of values in the frequency domain into the smaller number of values. The values in the frequency domain are obtained by the conversion performed by the corresponding FFT unit 201.

The coarse estimation unit 203 estimates a coarse reflectance distribution, using the values obtained by combining performed by the multiple binning units 202. The estimation of a coarse reflectance distribution performed by the coarse estimation unit 203 is herein referred to as coarse estimation.

The iterative fine estimation unit 204 estimates a higher-precise reflectance distribution through iterative processing, using, as an initial value, the coarse reflectance distribution estimated by the coarse estimation unit 203. The more precise estimation of a reflectance distribution performed by the iterative fine estimation unit 204 than the estimation of the coarse reflectance distribution performed by the coarse estimation unit 203 is herein referred to as fine estimation.

Note that the reception processing unit 111 may operate in such a manner that the coarse estimation unit 203 performs the coarse estimation more frequently than the fine estimation performed by the iterative fine estimation unit 204, the fine estimation estimating a reflectance distribution more precise than the coarse reflectance distribution, and when the reception processing unit 111 determines that an observation target object is present at a location suitable for observation in the observation area 107, on the basis of the coarse reflectance distribution estimated by the coarse estimation of the coarse estimation unit 203, the iterative fine estimation unit 204 performs the fine estimation. This will enable the reception processing unit 111 to increase efficiency in performing signal processing.

Using reflectance distribution information obtained through signal processing performed by the reception processing unit 111 described above, the object detection unit 112 performs processing such as detection of an object, identification of the object, and determination of the location of the object in the observation area 107. Thus, the signal analysis device 100 can provide a function of, for example, detecting a hazardous material, an object requiring examination, etc. in the observation area 107, and notifying a person operating the signal analysis device 100 accordingly.

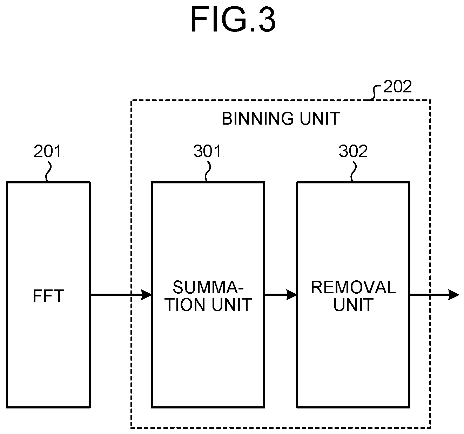

A configuration of the binning units 202 included in the reception processing unit 111 will next be described in detail. FIG. 3 is a diagram illustrating an exemplary configuration of each of the binning units 202 included in the reception processing unit 111 of the signal analysis device 100 according to the first embodiment. The binning units 202 each include a summation unit 301 and a removal unit 302.

The summation unit 301 sums up a certain number of adjacent values in some frequency regions among the values in the frequency domain obtained by conversion performed by the corresponding FFT unit 201. For example, when components in a certain frequency range are detected by the FFT unit 201, the summation unit 301 sums up the values in that frequency range, i.e., values in the frequency domain. The certain frequency range may be previously set as appropriate depending on the frequencies of signals transmitted from the transmission antennas 106 and received by the reception antennas 108, and a frequency expected to be scattered or absorbed by an observation target object in the observation area 107, etc. The summation unit 301 may collect, or combine the values in a certain frequency range in the frequency domain together, for example, at the center frequency of that frequency range or at a densest frequency band in that frequency range.

After the summation processing performed by the summation unit 301, the removal unit 302 deletes a value or values in a range including no meaningful values in the frequency domain. The removal unit 302 deletes, for example, a value or values in a frequency range including no values in the frequency domain having a predetermined magnitude, i.e., no frequency components having a predetermined magnitude. A value in the frequency domain having a predetermined magnitude may be determined on the basis of, for example, the absolute value of that value in the frequency domain. The removal unit 302 outputs, to the coarse estimation unit 203, the meaningful values remaining after deletion processing and index information representing a frequency range sparsely including the meaningful values.

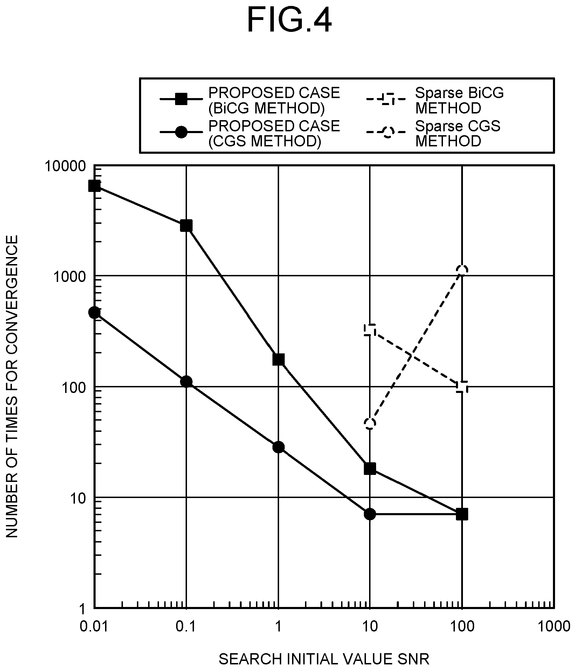

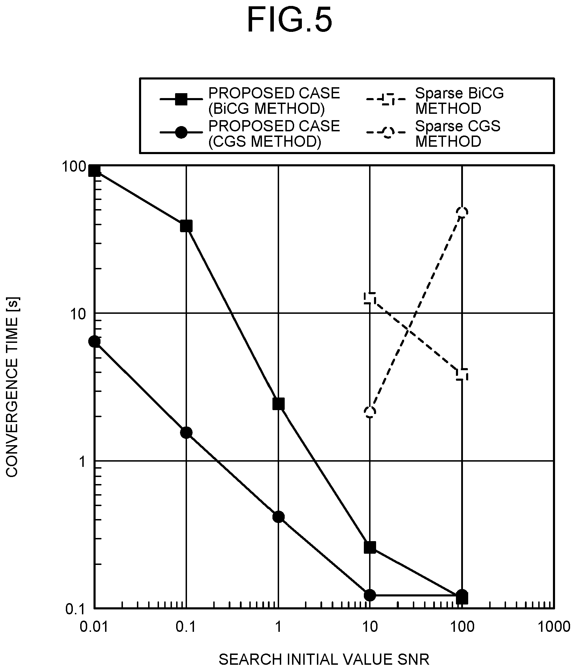

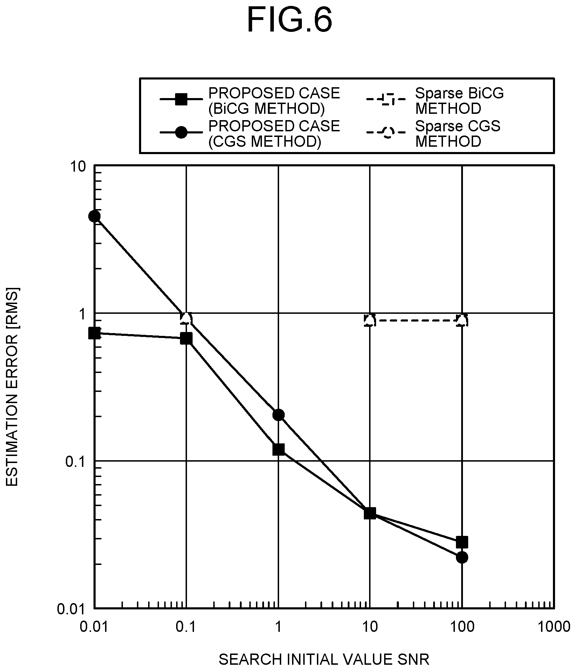

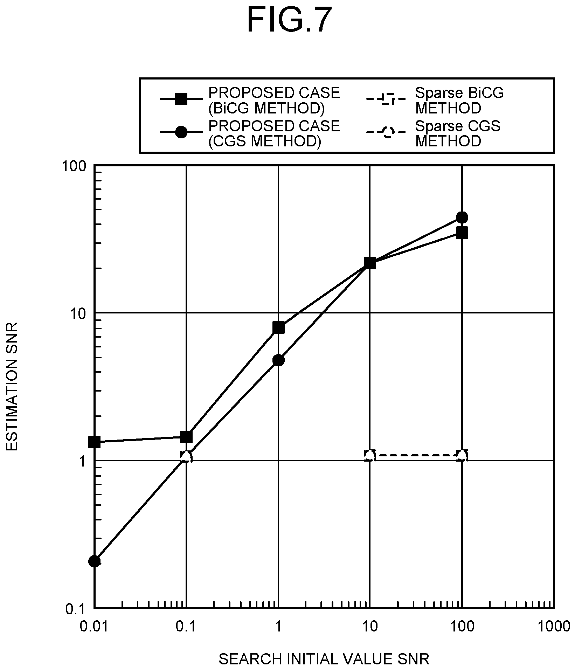

An advantage provided by reception processing of the reception processing unit 111 of the signal analysis device 100 in the present embodiment will next be described. FIG. 4 is a chart illustrating an example in which the reception processing of the reception processing unit 111 of the signal analysis device 100 according to the first embodiment produces an effect of reducing the number of convergences in the iterative fine estimation. FIG. 5 is a chart illustrating an example in which the reception processing of the reception processing unit 111 of the signal analysis device 100 according to the first embodiment produces an effect of reducing convergence time. FIG. 6 is a chart illustrating an example in which the reception processing of the reception processing unit 111 of the signal analysis device 100 according to the first embodiment produces an effect of reducing estimation error. FIG. 7 is a chart illustrating an example in which the reception processing of the reception processing unit 111 of the signal analysis device 100 according to the first embodiment produces an effect of improving estimation SNR. The charts illustrated in FIGs. 4, 5, 6, and 7 each illustrate characteristics provided by typical iterative calculation algorithms, i.e., a biconjugate gradient (BiCG) method and a conjugate gradient squared (CGS) method, each of which employs the reception processing of the reception processing unit 111 of the signal analysis device 100 and sparse processing.

Specifically, FIG. 4 illustrates examples of search initial value SNR versus the number of convergences characteristic, with the horizontal axis representing the search initial value SNR, and the vertical axis representing the number of times for convergence. In addition, FIG. 5 illustrates examples of search initial value SNR versus convergence time characteristic, with the horizontal axis representing the search initial value SNR, and the vertical axis representing the convergence time. Moreover, FIG. 6 illustrates examples of search initial value SNR versus estimation error characteristic, with the horizontal axis representing the search initial value SNR, and the vertical axis representing the estimation error. Furthermore, FIG. 7 illustrates examples of search initial value SNR versus estimation SNR characteristic, with the horizontal axis representing the search initial value SNR, and the vertical axis representing the estimation SNR.

As illustrated in FIGs. 4, 5, 6, and 7, both of the BiCG method and the CGS method, which employs the reception processing performed by the reception processing unit 111 of the signal analysis device, indicate that the number of convergences and the convergence time decrease with an increase in the search initial value SNR, which produces an effect of reducing a signal processing load dependent on initial information obtained, and also indicate that the increase in the search initial value SNR reduces the estimation error and increases the estimation SNR, which produces an effect of improving estimation accuracy. In contrast to the use of the reception processing of the reception processing unit 111 of the signal analysis device 100, the use of sparse processing provides a poorer convergence, a larger estimation error, and a smaller estimation SNR even when the search initial value SNR is relatively high, as illustrated in FIGs. 4, 5, 6, and 7, which results in a larger signal processing load.

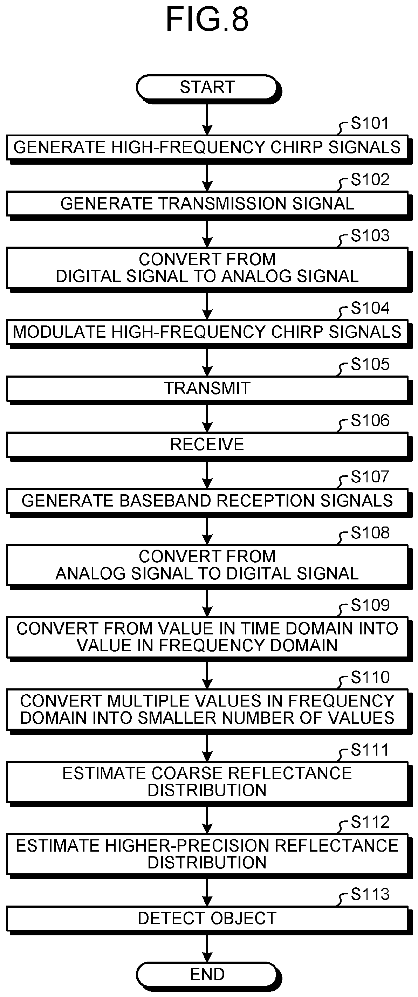

An operation of the signal analysis device 100 will next be described with reference to a flowchart. FIG. 8 is a flowchart illustrating an operation of the signal analysis device 100 according to the first embodiment. In the signal analysis device 100, the chirp signal generation unit 102 generates high-frequency chirp signals (step S101). The transmission signal generation unit 103 generates a transmission signal (step S102). The multiple DACs 104 each convert the transmission signal from a digital signal to an analog signal (step S103). The multiple mixers 105 modulate the high-frequency chirp signals generated by the chirp signal generation unit 102, using the transmission signals that are analog signals obtained by conversion performed by the DACs 104 (step S104). The multiple transmission antennas 106 transmit, toward the observation area 107, the chirp signals modulated by the mixers 105 (step S105). That is, the transmission unit 113 modulates the multiple chirp signals synchronized with one another, and transmits the modulated signals from the multiple transmission antennas 106 toward the observation area 107.

The multiple reception antennas 108 receive signals transmitted from the multiple transmission antennas 106 and scattered and/or absorbed in the observation area 107 (step S106). The multiple mixers 109 mix the signals received by the reception antennas 108, with the high-frequency chirp signals generated by the chirp signal generation unit 102, to generate baseband reception signals (step S107). The multiple ADCs 110 convert the baseband reception signals generated by the mixers 109 from analog signals to digital signals (step S108). That is, the reception unit 114 receives, with the multiple reception antennas 108, signals transmitted from the transmission unit 113 and passed through the observation area 107, mixes the chirp signals with reception signals received with the multiple reception antennas 108 to generate multiple baseband signals, and converts the multiple baseband signals from analog signals to digital signals.

The reception processing unit 111 converts the multiple baseband signals that are digital signals resulting from the conversion, from values in the time domain into values in the frequency domain (step S109). The reception processing unit 111 combines multiple values in the frequency domain, on a per predetermined frequency range basis to thereby convert the multiple values in the frequency domain into the smaller number of values than the multiple values in the frequency domain (step S110). The reception processing unit 111 estimates a coarse reflectance distribution in the observation area 107, using the smaller number of values (step S111). In combining values in the frequency domain, the reception processing unit 111 removes a range including no meaningful values in the frequency domain. The reception processing unit 111 estimates a reflectance distribution more precise than the coarse reflectance distribution, using the coarse reflectance distribution as an initial value of iterative estimation processing (step S112). The object detection unit 112 detects an object in the observation area 107, using the higher-precision reflectance distribution estimated by the reception processing unit 111 (step S113).

A hardware configuration of the signal analysis device 100 will next be described. In the signal analysis device 100, the transmission antennas 106 and the reception antennas 108 are antenna elements. The chirp signal generation unit 102 and the transmission signal generation unit 103 are oscillators. Other components in the signal analysis device 100 are implemented in processing circuitry. The processing circuitry may be a combination of a processor that executes a program stored in a memory and the memory or a dedicated hardware element. The processing circuitry is also called control circuit.

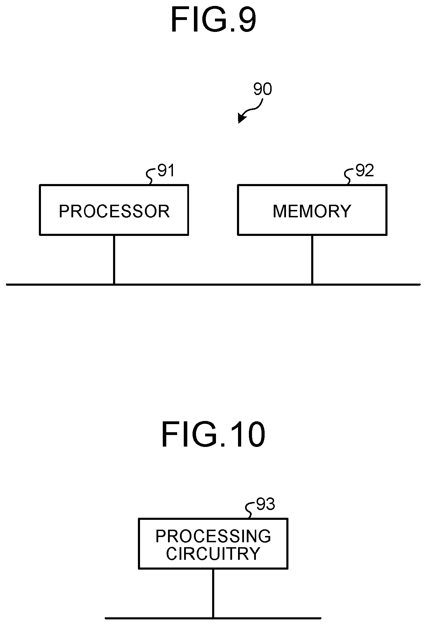

FIG. 9 is a diagram illustrating an exemplary configuration of processing circuitry 90 implementing the signal analysis device 100 according to the first embodiment when the processing circuitry is implemented by a processor 91 and a memory 92. The processing circuitry 90 illustrated in FIG. 9 is a control circuit, and includes the processor 91 and the memory 92. When the processing circuitry 90 includes the processor 91 and the memory 92, each functionality of the processing circuitry 90 is implemented in software, firmware, or a combination of software and firmware. The software or firmware is described in the form of a program, and is stored in the memory 92. The processing circuitry 90 implements each functionality in such a manner that the processor 91 reads and executes a program stored in the memory 92. That is, the processing circuitry 90 includes the memory 92 for storing a program that causes processing of the signal analysis device 100 to be performed. It can also be said that this program is a program for causing the signal analysis device 100 to perform each functionality to be implemented by the processing circuitry 90. This program may be provided using a storage medium storing the program or using another means such as a communication medium.

It can also be said that the foregoing program is a program that causes the signal analysis device 100 to perform a first step in which the transmission unit 113 modulates multiple chirp signals synchronized with one another, and transmits the modulated signals from the multiple transmission antennas 106 toward the observation area 107; a second step in which the reception unit 114 receives, with the multiple reception antennas 108, signals transmitted from the transmission unit 113 and passed through the observation area 107, mixes the chirp signals with reception signals received with the multiple reception antennas 108 to generate multiple baseband signals, and converts the multiple baseband signals from analog signals to digital signals; and a third step in which the reception processing unit 111 converts the multiple baseband signals that are digital signals resulting from the conversion, from values in the time domain into values in the frequency domain, combines multiple values in the frequency domain on a per predetermined frequency range basis to thereby convert the multiple values in the frequency domain into values smaller in number than the multiple values in the frequency domain, estimates a coarse reflectance distribution in the observation area 107, using the smaller number of values, and estimates a reflectance distribution with respect to the observation area 107 using the coarse reflectance distribution as an initial value of iterative estimation processing, the reflectance distribution being more precise than the coarse reflectance distribution.

In this respect, the processor 91 is, for example, a central processing unit (CPU), a processing unit, a computing unit, a microprocessor, a microcomputer, a digital signal processor (DSP), or the like. In addition, the memory 92 is, for example, a non-volatile or volatile semiconductor memory such as a random access memory (RAM), a read-only memory (ROM), a flash memory, an erasable programmable ROM (EPROM), or an electrically erasable programmable ROM (EEPROM) (registered trademark); a magnetic disk, a flexible disk, an optical disk, a compact disc, a MiniDisc, a digital versatile disc (DVD), or the like.

FIG. 10 is a diagram illustrating an example of a processing circuitry 93 implementing the signal analysis device 100 according to the first embodiment when the processing circuitry is configured using a dedicated hardware element. The processing circuitry 93 illustrated in FIG. 10 is, for example, a single circuit, a set of multiple circuits, a programmed processor, a parallel programmed processor, an application specific integrated circuit (ASIC), a field programmable gate array (FPGA), or a combination thereof. The processing circuitry may be implemented partially by a dedicated hardware element and partially by software or firmware. Thus, the processing circuitry can implement each foregoing functionality in a dedicated hardware element, software, firmware, or a combination thereof.

As described above, according to the present embodiment, with the reception unit 114, the signal analysis device 100 receives signals transmitted from the transmission unit 113 and scattered and/or absorbed in the observation area 107. In the reception processing unit 111 of the signal analysis device 100, the multiple FFT units 201 group the values into sets of values in small frequency ranges. The multiple binning units 202 each sum up adjacent values in small frequency ranges, extract values having a relatively large absolute value, and combine the extracted values into a small number of coarse frequency components. The coarse estimation unit 203 estimates a coarse reflectance distribution, using the coarse frequency components. The iterative fine estimation unit 204, which uses the estimated value of the coarse reflectance distribution as a search initial value, estimates a high-resolution reflectance distribution in a stepwise manner repeating a gradient descent method such as typical iterative calculation algorithms, i.e., BiCG method or CGS method, using the segmented frequency components. This enables the signal analysis device 100 to reduce the load of performing signal processing on a reception signal. The signal analysis device 100 can reduce signal processing load even in a case where a sparse estimation is difficult to use. As the signal analysis device 100 reduces the signal processing load, the signal analysis device 100 produces an effect of acceleration of signal processing.

### Second Embodiment.

The signal analysis device 100 in the first embodiment generates the high-frequency chirp signals, using the chirp signal generation unit 102. In a second embodiment, a signal analysis device will be described as generating the high-frequency chirp signals, using other components.

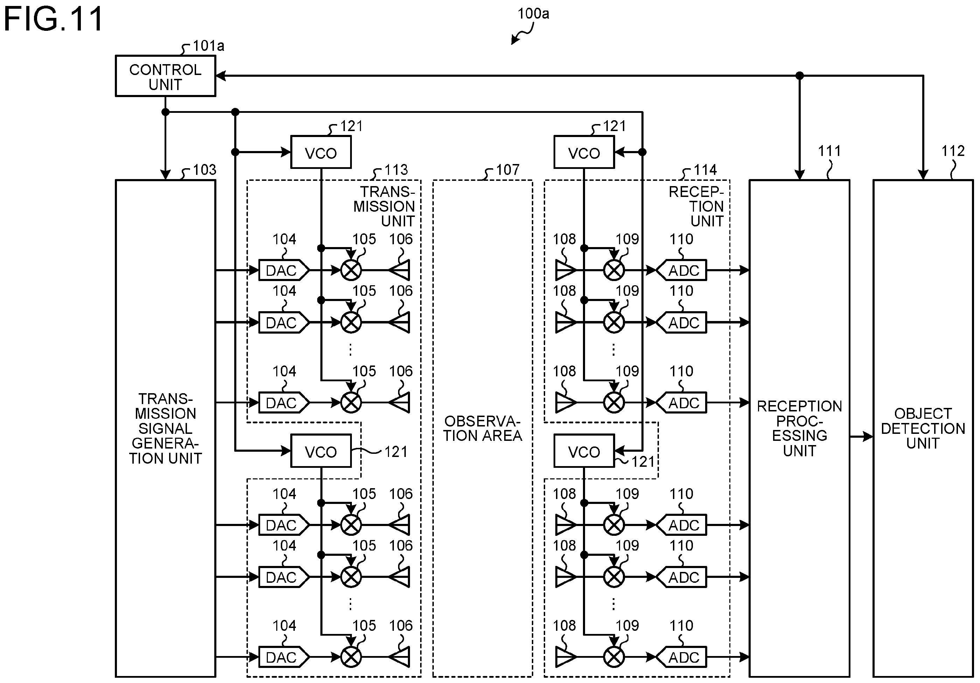

FIG. 11 is a diagram illustrating an exemplary configuration of a signal analysis device 100a according to the second embodiment. The signal analysis device 100a differs from the signal analysis device 100 of the first embodiment illustrated in FIG. 1 in deleting the control unit 101 and the chirp signal generation unit 102 and including a control unit 101a and multiple voltage controlled oscillators (VCOs) 121.

A certain number of multiple VCOs 121 are disposed near the transmission antennas 106 and the reception antennas 108. The VCOs 121 are each an oscillator that outputs a signal having a frequency dependent on an input voltage. Note that although the signal analysis device 100a includes four VCOs 121 in the example of FIG. 11, the number of the VCOs 121 included in the signal analysis device 100a is not limited to four.

The control unit 101a controls operation of the signal analysis device 100a. Specifically, the control unit 101a controls operation such as generation of high-frequency chirp signals by the VCOs 121, generation of a transmission signal by the transmission signal generation unit 103, reception processing performed by the reception processing unit 111, and detection of an object by the object detection unit 112. Note that the control unit 101a may communicate with an external device not illustrated and control operation of the signal analysis device 100a on the basis of an instruction from the external device or the like. In the first embodiment, the control unit 101 instructs the chirp signal generation unit 102 to generate high-frequency chirp signals. In the second embodiment, the control unit 101a controls a control signal such as a voltage output to each of the VCOs 121 to thereby control generation of the high-frequency chirp signals performed by the VCOs 121. The control unit 101a may control generation of the control signal to be output to each of the VCOs 121, using a clock multiplier for high frequency generation. By thus controlling the operation of the VCOs 121 each of which is an oscillator for generating high-frequency chirp signals, the control unit 101a distributes the high-frequency chirp signals to the transmission unit 113 and the reception unit 114.

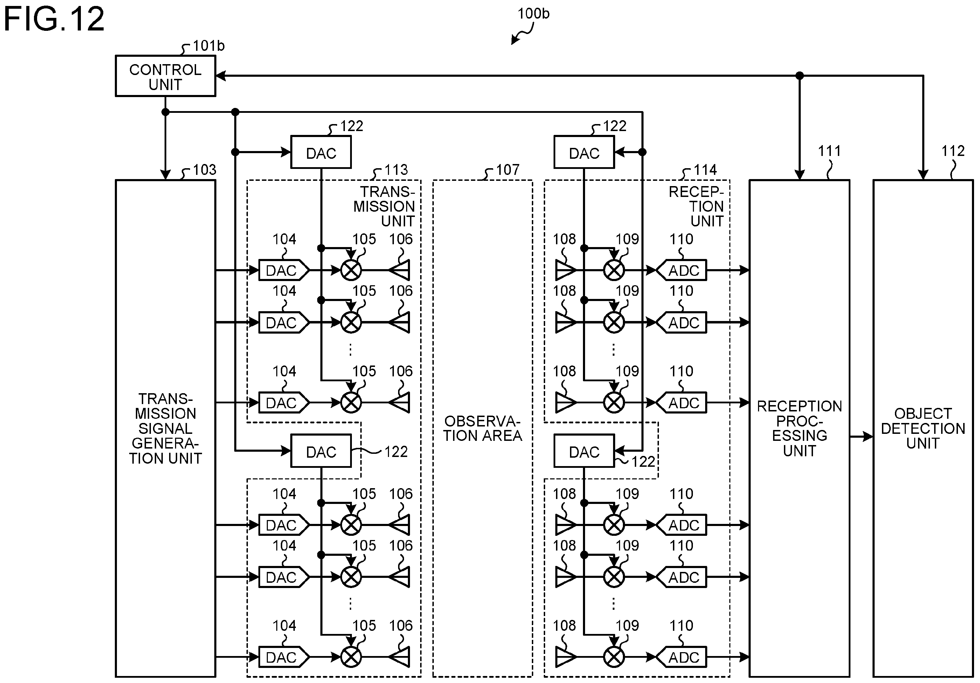

FIG. 12 is a diagram illustrating an exemplary configuration of a signal analysis device 100b according to the second embodiment. The signal analysis device 100b differs from the signal analysis device 100 of the first embodiment illustrated in FIG. 1 in deleting the control unit 101 and the chirp signal generation unit 102 and including a control unit 101b and multiple DACs 122.

A certain number of DACs 122 are disposed near the transmission antennas 106 and the reception antennas 108, and each output a signal having a frequency dependent on a control signal from the control unit 101b. Note that although the signal analysis device 100b includes four DACs 122 in the example of FIG. 12, the number of the DACs 122 included in the signal analysis device 100b is not limited to four.

The control unit 101b controls operation of the signal analysis device 100b. Specifically, the control unit 101b controls operation such as generation of high-frequency chirp signals by the DACs 122, generation of a transmission signal by the transmission signal generation unit 103, reception processing performed by the reception processing unit 111, and detection of an object by the object detection unit 112. Note that the control unit 101b may communicate with an external device not illustrated and control operation of the signal analysis device 100b on the basis of an instruction from the external device or the like. In the first embodiment, the control unit 101 instructs the chirp signal generation unit 102 to generate high-frequency chirp signals. In the second embodiment, the control unit 101b controls a control signal directed to each of the DACs 122, e.g., a clock or waveform data, to thereby control generation of the high-frequency chirp signals performed by the DACs 122. The control unit 101b may control generation of the control signal to be output to each of the DACs 122, using a clock multiplier for high frequency generation. Thus, the control unit 101b controls operation of the DACs 122 of generating the high-frequency chirp signals to thereby distribute the high-frequency chirp signals to the transmission unit 113 and the reception unit 114.

Similarly to the high-frequency chirp signals generated by the chirp signal generation unit 102 of the signal analysis device 100, the high-frequency chirp signals generated by the signal analysis device 100a and by the signal analysis device 100b may each be an up-chirp signal having its frequency increasing over time, or a down-chirp signal having its frequency decreasing over time. In addition, also similarly to the high-frequency chirp signals generated by the chirp signal generation unit 102 of the signal analysis device 100, the high-frequency chirp signals generated by the signal analysis device 100a and the signal analysis device 100b may be continuous chirp signals having their frequencies continuously swept, step chirp signals having frequencies varying discontinuously in a stepwise manner, or frequency hopping signals having their frequencies varying discontinuously more irregularly.

Note that operation other than the operation of generation of the high-frequency chirp signals in the signal analysis device 100a and the signal analysis device 100b is similar to the operation of the signal analysis device 100 of the first embodiment.

As described above, the signal analysis device 100a can provide an advantage similar to the advantage provided by the signal analysis device 100 of the first embodiment even when the high-frequency chirp signals are generated using the VCOs 121. In addition, the signal analysis device 100b can provide an advantage similar to the advantage provided by the signal analysis device 100 of the first embodiment even when the high-frequency chirp signals are generated using the DACs 122.

### Third Embodiment.

In a third embodiment, a signal analysis device will be described as using information obtained by a camera as an initial value for estimating a higher-precision reflectance distribution by performing iterative processing.

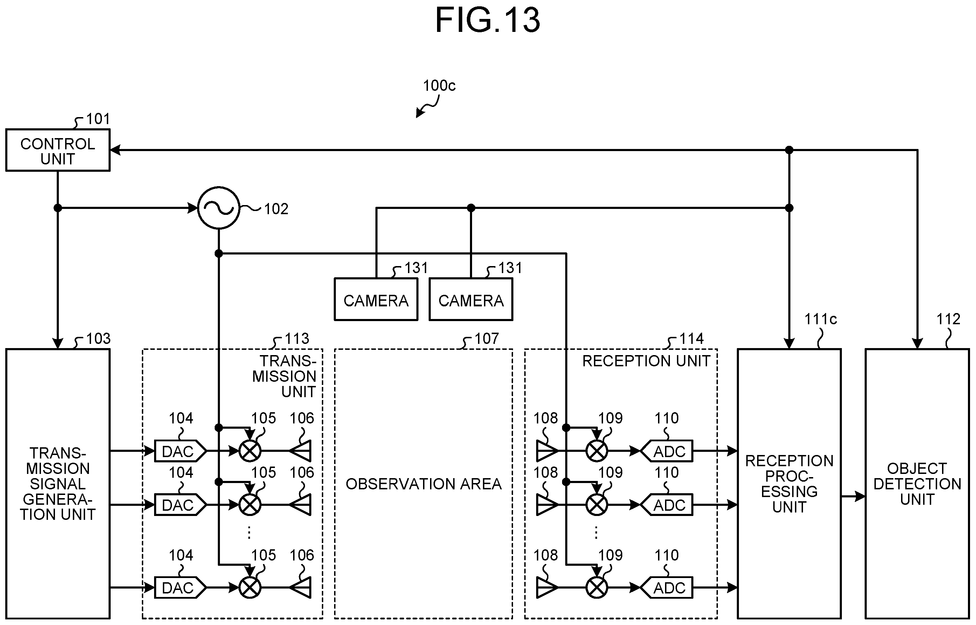

FIG. 13 is a diagram illustrating an exemplary configuration of a signal analysis device 100c according to the third embodiment. The signal analysis device 100c differs from the signal analysis device 100 of the first embodiment illustrated in FIG. 1 in deleting the reception processing unit 111 and including a reception processing unit 111c and multiple cameras 131.

The multiple cameras 131 each capture an image showing a state of the observation area 107. The multiple cameras 131 output information obtained by shooting the observation area 107, to the reception processing unit 111c. Note that although the signal analysis device 100c includes two cameras 131 in the example of FIG. 13, the number of the cameras 131 included in the signal analysis device 100c is not limited to two.

Under control of the control unit 101, the reception processing unit 111c performs signal processing, etc. on the multiple reception signals that are digital signals obtained by conversion performed by the multiple ADCs 110 and on the information obtained from the cameras 131.

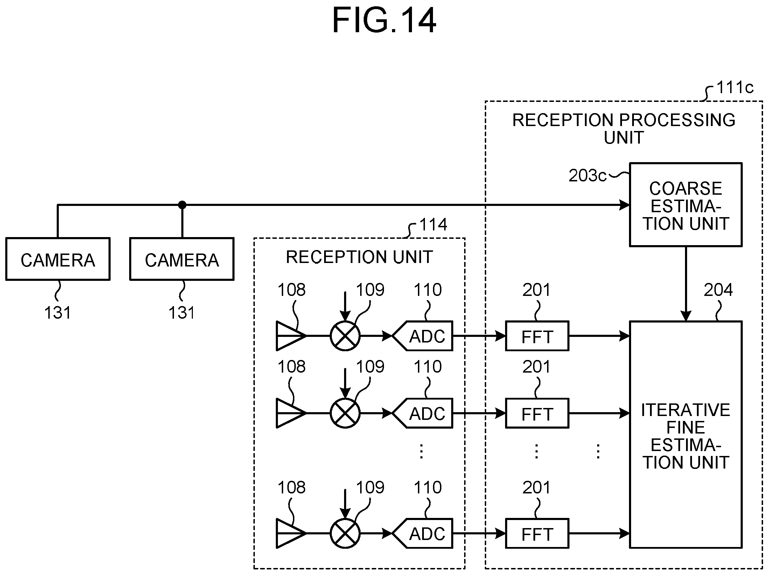

A configuration of the reception processing unit 111c will next be described in detail. FIG. 14 is a first diagram illustrating an exemplary configuration of the reception processing unit 111c of the signal analysis device 100c according to the third embodiment. The reception processing unit 111c includes the multiple FFT units 201, a coarse estimation unit 203c, and the iterative fine estimation unit 204. The coarse estimation unit 203c estimates a coarse reflectance distribution, using the information obtained by the cameras 131. The method for estimating a coarse reflectance distribution by the coarse estimation unit 203c may be the same method as the method described in Patent Literature 1 or a method different from the method described in Patent Literature 1, and is not particularly limited. As described above, the reception processing unit 111c estimates a coarse reflectance distribution, using the information obtained by the cameras 131 shooting the observation area 107.

Note that similarly to the reception processing unit 111 of the first embodiment, the reception processing unit 111c may operate in such a manner that the coarse estimation unit 203c performs the coarse estimation more frequently than the fine estimation performed by the iterative fine estimation unit 204, the fine estimation estimating a reflectance distribution more precise than the coarse reflectance distribution, and when the reception processing unit 111c determines that the observation target object is present at a location suitable for observation in the observation area 107, on the basis of the coarse reflectance distribution estimated by the coarse estimation of the coarse estimation unit 203c, the iterative fine estimation unit 204 performs the fine estimation. This will enable the reception processing unit 111c to increase efficiency in performing signal processing.

As described above, the signal analysis device 100c uses the cameras 131, and can thus provide an advantage similar to the advantage provided by the signal analysis device 100 of the first embodiment even when the coarse reflectance distribution is estimated using the information obtained by the cameras 131.

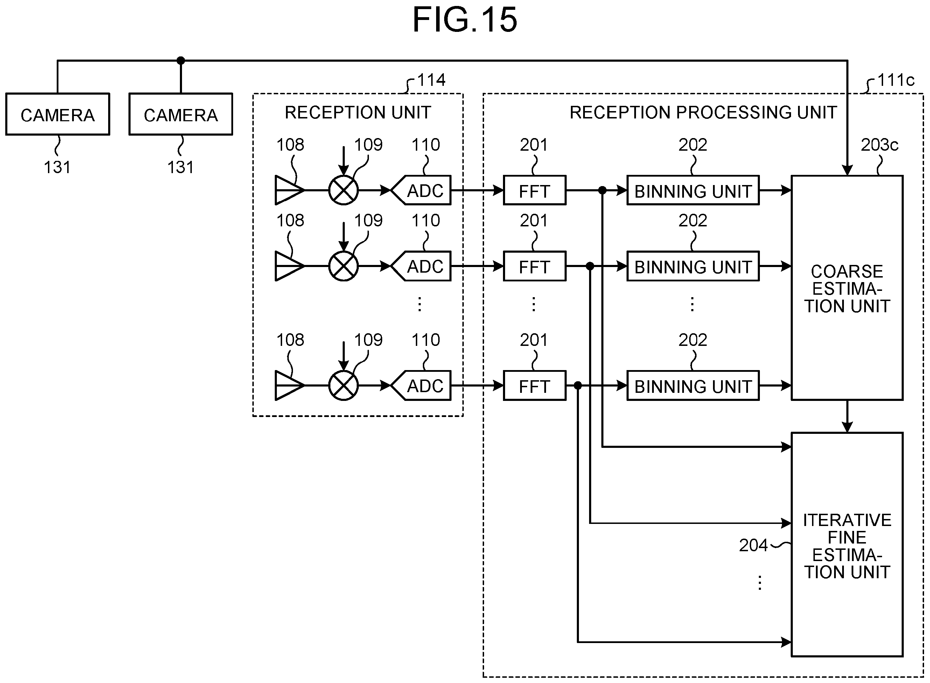

Note that although in the present embodiment, the coarse estimation unit 203c has been described as estimating the coarse reflectance distribution, using information obtained by the cameras 131, the method is not limited thereto. The coarse estimation unit 203c may estimate the coarse reflectance distribution, using the information obtained by the cameras 131 together with the information obtained by the multiple FFT units 201 and by the multiple binning units 202 similarly to the coarse estimation unit 203 of the first embodiment. FIG. 15 is a second diagram illustrating an exemplary configuration of the reception processing unit 111c of the signal analysis device 100c according to the third embodiment. As is described and illustrated, the coarse estimation unit 203c can estimate a coarse reflectance distribution, using the information obtained from the cameras 131 and the multiple binning units 202.

The configurations described in the foregoing embodiments are merely examples. These configurations may be combined with another known technology, and configurations of different embodiments may be combined together.

### Reference Signs List

100, 100a, 100b, 100c signal analysis device; 101, 101a, 101b control unit; 102 chirp signal generation unit; 103 transmission signal generation unit; 104, 122 DAC; 105, 109 mixer; 106 transmission antenna; 107 observation area; 108 reception antenna; 110 ADC; 111, 111c reception processing unit; 112 object detection unit; 113 transmission unit; 114 reception unit; 121 VCO; 131 camera; 201 FFT unit; 202 binning unit; 203, 203c coarse estimation unit; 204 iterative fine estimation unit; 301 summation unit; 302 removal unit.

## Claims

1. A signal analysis device (100) comprising:
a transmission unit (113) to modulate a plurality of chirp signals synchronized with one another, and transmit the modulated signals from a plurality of transmission antennas (106) toward an observation area (107);
a reception unit (114) to: receive, with a plurality of reception antennas, signals transmitted from the transmission unit and passed through the observation area; mix the chirp signals with reception signals received with the plurality of reception antennas to generate a plurality of baseband signals, one for each reception antenna; and convert each of the plurality of baseband signals from analog signals to digital signals; and
a reception processing unit (111) to: convert each of the plurality of baseband signals that are digital signals resulting from the conversion, from values in a time domain into values in a frequency domain; combine, for each of the converted baseband signals, a plurality of values in the frequency domain on a per predetermined frequency range basis to thereby convert the plurality of values in the frequency domain into values smaller in number than the plurality of values in the frequency domain; to estimate a coarse reflectance distribution in the observation area, using the smaller number of values; and to estimate a reflectance distribution with respect to the observation area, using the coarse reflectance distribution as an initial value of iterative estimation processing, the reflectance distribution being more precise than the coarse reflectance distribution.

2. The signal analysis device according to claim 1, wherein
the reception processing unit (111c) estimates the coarse reflectance distribution, using information obtained by a camera (131) shooting the observation area.

3. The signal analysis device according to claim 1 or 2, wherein
in combining the values in the frequency domain, the reception processing unit (111) removes a range including no meaningful value in the frequency domain.

4. The signal analysis device according to any one of claims 1 to 3, wherein
the chirp signals are continuous chirp signals.

5. The signal analysis device according to any one of claims 1 to 3, wherein
the chirp signals are step chirp signals.

6. The signal analysis device according to any one of claims 1 to 3, wherein
the chirp signals are frequency hopping signals.

7. The signal analysis device according to any one of claims 1 to 6, comprising:
a control unit (101) to control generation of the chirp signals, wherein
the control unit distributes the chirp signals to the transmission unit and the reception unit by controlling operation of an oscillator (102) that generates the chirp signals.

8. The signal analysis device according to any one of claims 1 to 6, comprising:
a control unit (101b) to control generation of the chirp signals, wherein
the control unit distributes the chirp signals to the transmission unit and the reception unit by controlling operation of a digital-to-analog converter that generates the chirp signals.

9. The signal analysis device according to any one of claims 1 to 8, wherein
the reception processing unit (111) performs coarse estimation more frequently than fine estimation, and when the reception processing unit determines that an observation target object is present at a location suitable for observation in the observation area on a basis of the coarse reflectance distribution estimated by the coarse estimation, the reception processing unit performs the fine estimation, the coarse estimation estimating the coarse reflectance distribution, the fine estimation estimating a reflectance distribution more precise than the coarse reflectance distribution.

10. A control circuit included in a signal analysis device (100) for controlling the signal analysis device (100), wherein the control circuit includes a processor (91) and a memory (92), the memory storing a program which, when read and executed by the processor, causes the signal analysis device to:
modulate a plurality of chirp signals synchronized with one another, and transmit the modulated signals from a plurality of transmission antennas (106) toward an observation area (107);
receive, with a plurality of reception antennas (108), signals transmitted and passed through the observation area, mix the chirp signals with reception signals received with the plurality of reception antennas to generate a plurality of baseband signals, one for each reception antenna, and convert each of the plurality of baseband signals from analog signals to digital signals; and
convert each of the plurality of baseband signals that are digital signals resulting from the conversion, from values in a time domain into values in a frequency domain, combine, for each of the converted baseband signals, a plurality of values in the frequency domain on a per predetermined frequency range basis to thereby convert the plurality of values in the frequency domain into values smaller in number than the plurality of values in the frequency domain, estimate a coarse reflectance distribution in the observation area, using the smaller number of values, and estimate a reflectance distribution with respect to the observation area, using the coarse reflectance distribution as an initial value of iterative estimation processing, the reflectance distribution being more precise than the coarse reflectance distribution.

11. A storage medium included in a signal analysis device (100), wherein
the storage medium storing a program which, when executed by a processor, causes the signal analysis device to:
modulate a plurality of chirp signals synchronized with one another, and transmit the modulated signals from a plurality of transmission antennas (106) toward an observation area (107);
receive, with a plurality of reception antennas (108), signals transmitted and passed through the observation area, mix the chirp signals with reception signals received with the plurality of reception antennas to generate a plurality of baseband signals, one for each reception antenna, and convert each of the plurality of baseband signals from analog signals to digital signals; and
convert each of the plurality of baseband signals that are digital signals resulting from the conversion, from values in a time domain into values in a frequency domain, combine, for each of the converted baseband signals, a plurality of values in the frequency domain on a per predetermined frequency range basis to thereby convert the plurality of values in the frequency domain into values smaller in number than the plurality of values in the frequency domain, estimate a coarse reflectance distribution in the observation area, using the smaller number of values, and estimate a reflectance distribution with respect to the observation area, using the coarse reflectance distribution as an initial value of iterative estimation processing, the reflectance distribution being more precise than the coarse reflectance distribution.

12. A signal analysis method for use in a signal analysis device (100), the signal analysis method comprising:
a first step in which a transmission unit (113) modulates a plurality of chirp signals synchronized with one another, and transmits the modulated signals from a plurality of transmission antennas (106) toward an observation area (107);
a second step in which a reception unit (114) receives, with a plurality of reception antennas (108), signals transmitted from the transmission unit and passed through the observation area, mixes the chirp signals with reception signals received with the plurality of reception antennas to generate a plurality of baseband signals, one for each reception antenna, and converts each of the plurality of baseband signals from analog signals to digital signals; and
a third step in which a reception processing unit (111) converts each of the plurality of baseband signals that are digital signals resulting from the conversion, from values in a time domain into values in a frequency domain, combines, for each of the converted baseband signals, a plurality of values in the frequency domain on a per predetermined frequency range basis to thereby convert the plurality of values in the frequency domain into values smaller in number than the plurality of values in the frequency domain, estimates a coarse reflectance distribution in the observation area, using the smaller number of values, and estimates a reflectance distribution with respect to the observation area, using the coarse reflectance distribution as an initial value of iterative estimation processing, the reflectance distribution being more precise than the coarse reflectance distribution.

## Patentansprüche

1. Signalanalysevorrichtung (100), umfassend:
eine Übermittlungseinheit (113) zum Modulieren einer Vielzahl von miteinander synchronisierten Chirp-Signalen und zum Übermitteln der modulierten Signale von einer Vielzahl von Übermittlungsantennen (106) in Richtung eines Beobachtungsgebiets (107);
eine Empfangseinheit (114) zum: Empfangen von Signalen, die von der Übermittlungseinheit übermittelt und durch das Beobachtungsgebiet geleitet werden, mit einer Vielzahl von Empfangsantennen; Mischen der Chirp-Signale mit von der Vielzahl von Empfangsantennen empfangenen Empfangssignalen, um eine Vielzahl von Basisbandsignalen zu erzeugen, eines für jede Empfangsantenne; und Umwandeln jedes der Vielzahl von Basisbandsignalen von analogen Signalen in digitale Signale; und
eine Empfangsverarbeitungseinheit (111) zum: Umwandeln jedes der Vielzahl von Basisbandsignalen, die aus der Umwandlung resultierende digitale Signale sind, von Werten im Zeitbereich in Werte im Frequenzbereich; Kombinieren, für jedes der umgewandelten Basisbandsignale, einer Vielzahl von Werten im Frequenzbereich auf der Grundlage eines vorbestimmten Frequenzbereichs, um dadurch die Vielzahl von Werten im Frequenzbereich in eine geringere Anzahl von Werten umzuwandeln als die Vielzahl von Werten im Frequenzbereich; Schätzen einer groben Reflexionsverteilung im Beobachtungsgebiet unter Verwendung der geringeren Anzahl von Werten; und Schätzen einer Reflexionsverteilung in Bezug auf den Beobachtungsgebiet unter Verwendung der groben Reflexionsverteilung als Ausgangswert für einen iterativen Schätzvorgang, wobei die Reflexionsverteilung präziser ist als die grobe Reflexionsverteilung.

2. Signalanalysevorrichtung nach Anspruch 1, wobei
die Empfangsverarbeitungseinheit (111c) die grobe Reflexionsverteilung anhand von Informationen schätzt, die von einer Kamera (131) erfasst werden, die das Beobachtungsgebiet aufnimmt.

3. Signalanalysevorrichtung nach Anspruch 1 oder 2, wobei
die Empfangsverarbeitungseinheit (111) bei der Kombination der Werte im Frequenzbereich einen Bereich entfernt, der im Frequenzbereich keinen aussagekräftigen Wert enthält.

4. Signalanalysevorrichtung nach einem der Ansprüche 1 bis 3, wobei
es sich bei den Chirp-Signalen um kontinuierliche Chirp-Signale handelt.

5. Signalanalysevorrichtung nach einem der Ansprüche 1 bis 3, wobei
es sich bei den Chirp-Signalen um Stufen-Chirp-Signale handelt.

6. Signalanalysevorrichtung nach einem der Ansprüche 1 bis 3, wobei
es sich bei den Chirp-Signalen um Frequenzsprungsignale handelt.

7. Signalanalysevorrichtung nach einem der Ansprüche 1 bis 6, umfassend:
eine Steuereinheit (101) zum Steuern der Erzeugung der Chirp-Signale, wobei
die Steuereinheit die Chirp-Signale auf die Übermittlungseinheit und die Empfangseinheit verteilt, indem sie einen Betrieb eines Oszillators (102) steuert, der die Chirp-Signale erzeugt.

8. Signalanalysevorrichtung nach einem der Ansprüche 1 bis 6, umfassend:
eine Steuereinheit (101b) zum Steuern der Erzeugung der Chirp-Signale, wobei
die Steuereinheit die Chirp-Signale auf die Übermittlungseinheit und die Empfangseinheit verteilt, indem sie einen Betrieb eines Digital-Analog-Wandlers steuert, der die Chirp-Signale erzeugt.

9. Signalanalysevorrichtung nach einem der Ansprüche 1 bis 8, wobei
die Empfangsverarbeitungseinheit (111) eine Grobschätzung häufiger durchführt als eine Feinschätzung, und wenn die Empfangsverarbeitungseinheit auf Grundlage der durch die Grobschätzung geschätzten groben Reflexionsverteilung feststellt, dass sich ein zu beobachtendes Zielobjekt an einer für die Beobachtung geeigneten Stelle im Beobachtungsgebiet befindet, führt die Empfangsprozesseinheit die Feinschätzung durch, wobei die Grobschätzung die grobe Reflexionsverteilung schätzt und die Feinschätzung eine Reflexionsverteilung schätzt, die präziser ist als die grobe Reflexionsverteilung.

10. Steuerschaltung, die in einer Signalanalysevorrichtung (100) zum Steuern der Signalanalysevorrichtung (100) enthalten ist, wobei die Steuerschaltung einen Prozessor (91) und einen Speicher (92) umfasst, wobei der Speicher ein Programm speichert, das, wenn es vom Prozessor gelesen und ausgeführt wird, bewirkt, dass die Signalanalysevorrichtung:
eine Vielzahl von miteinander synchronisierten Chirp-Signalen moduliert und die modulierten Signale von einer Vielzahl von Übermittlungsantennen (106) in Richtung eines Beobachtungsgebiets (107) übermittelt;
Signale mit einer Vielzahl von Empfangsantennen (108) empfängt, die durch das Beobachtungsgebiet übermittelt und durchgeleitet werden, die Chirp-Signale mit von der Vielzahl von Empfangsantennen empfangenen Empfangssignalen mischt, um eine Vielzahl von Basisbandsignalen zu erzeugen, nämlich eines für jede Empfangsantenne , und jedes der Vielzahl von Basisbandsignalen von analogen Signalen in digitale Signale umwandelt; und
jedes der Vielzahl von Basisbandsignalen, bei denen es sich um digitale Signale handelt, die aus der Umwandlung resultieren, von Werten im Zeitbereich in Werte im Frequenzbereich umwandelt, für jedes der umgewandelten Basisbandsignale eine Vielzahl von Werten im Frequenzbereich auf der Grundlage eines vorbestimmten Frequenzbereichs kombiniert, um dadurch die Vielzahl von Werten im Frequenzbereich in eine geringere Anzahl von Werten umzuwandeln als die Vielzahl von Werten im Frequenzbereich, unter Verwendung der geringeren Anzahl von Werten eine grobe Reflexionsverteilung im Beobachtungsgebiet schätzt und unter Verwendung der groben Reflexionsverteilung als Anfangswert für einen iterativen Schätzvorgang eine Reflexionsverteilung in Bezug auf das Beobachtungsgebiet schätzt, wobei die Reflexionsverteilung präziser ist als die grobe Reflexionsverteilung.

11. Speichermedium in der Signalanalysevorrichtung (100) enthalten, wobei
das Speichermedium, auf dem ein Programm gespeichert ist, das bei Ausführung durch einen Prozessor bewirkt, dass die Signalanalysevorrichtung:
eine Vielzahl von miteinander synchronisierten Chirp-Signalen moduliert und die modulierten Signale von einer Vielzahl von Übermittlungsantennen (106) in Richtung eines Beobachtungsgebiets (107) übermittelt;
Signale mit einer Vielzahl von Empfangsantennen (108) empfängt, die durch das Beobachtungsgebiet übermittelt und durchgeleitet werden, die Chirp-Signale mit von der Vielzahl von Empfangsantennen empfangenen Empfangssignalen mischt, um eine Vielzahl von Basisbandsignalen zu erzeugen, nämlich eines für jede Empfangsantenne , und jedes der Vielzahl von Basisbandsignalen von analogen Signalen in digitale Signale umwandelt; und
jedes der Vielzahl von Basisbandsignalen, bei denen es sich um digitale Signale handelt, die aus der Umwandlung resultieren, von Werten im Zeitbereich in Werte im Frequenzbereich umwandelt, für jedes der umgewandelten Basisbandsignale eine Vielzahl von Werten im Frequenzbereich auf der Grundlage eines vorbestimmten Frequenzbereichs kombiniert, um dadurch die Vielzahl von Werten im Frequenzbereich in eine geringere Anzahl von Werten umzuwandeln als die Vielzahl von Werten im Frequenzbereich, unter Verwendung der geringeren Anzahl von Werten eine grobe Reflexionsverteilung im Beobachtungsgebiet schätzt und unter Verwendung der groben Reflexionsverteilung als Anfangswert für einen iterativen Schätzvorgang eine Reflexionsverteilung in Bezug auf das Beobachtungsgebiet schätzt, wobei die Reflexionsverteilung präziser ist als die grobe Reflexionsverteilung.

12. Signalanalyseverfahren zum Verwenden in einer Signalanalysevorrichtung (100), wobei das Signalanalyseverfahren umfasst:
einen ersten Schritt, bei dem eine Übermittlungseinheit (113) eine Vielzahl von miteinander synchronisierten Chirp-Signalen moduliert und die modulierten Signale von einer Vielzahl von Übermittlungsantennen (106) in Richtung eines Beobachtungsgebiets (107) übermittelt;
einen zweiten Schritt, bei dem eine Empfangseinheit (114) mit einer Vielzahl von Empfangsantennen (108) Signale empfängt, die von der Übermittlungseinheit übermittelt und durch das Beobachtungsgebiet geleitet wurden, die Chirp-Signale mit von der Vielzahl von Empfangsantennen empfangenen Empfangssignalen mischt, um eine Vielzahl von Basisbandsignalen zu erzeugen, nämlich eines für jede Empfangsantenne, und jedes der zahlreichen Basisbandsignale von analogen Signalen in digitale Signale umwandelt; und
einen dritten Schritt, in dem eine Empfangsverarbeitungseinheit (111) jedes der Vielzahl von Basisbandsignalen, bei denen es sich um digitale Signale handelt, die aus der Umwandlung resultieren, von Werten in einem Zeitbereich in Werte in einem Frequenzbereich umwandelt, für jedes der umgewandelten Basisbandsignale eine Vielzahl von Werten im Frequenzbereich auf der Grundlage eines vorgegebenen Frequenzbereichs kombiniert, um dadurch die Vielzahl von Werten im Frequenzbereich in eine geringere Anzahl von Werten umzuwandeln als die Vielzahl von Werten im Frequenzbereich, eine grobe Reflexionsverteilung im Beobachtungsgebiet unter Verwendung der geringeren Anzahl von Werten schätzt und eine Reflexionsverteilung in Bezug auf das Beobachtungsgebiet unter Verwendung der groben Reflexionsverteilung als Anfangswert für einen iterativen Schätzvorgang schätzt, wobei die Reflexionsverteilung präziser ist als die grobe Reflexionsverteilung.

## Revendications

1. Un dispositif d'analyse de signal (100) comprenant :
une unité de transmission (113) pour moduler une pluralité de signaux chirp synchronisés les uns avec les autres, et transmettre les signaux modulés depuis une pluralité d'antennes de transmission (106) vers une zone d'observation (107) ;
une unité de réception (114) pour : recevoir, avec une pluralité d'antennes de réception, des signaux transmis depuis l'unité de transmission et passés à travers la zone d'observation ; mélanger les signaux chirp avec des signaux de réception reçus avec la pluralité d'antennes de réception pour générer une pluralité de signaux en bande de base, un pour chaque antenne de réception ; et convertir chacun de la pluralité de signaux en bande de base depuis des signaux analogiques en des signaux numériques ; et
une unité de traitement de réception (111) pour : convertir chacun des signaux de la pluralité de signaux en bande de base qui sont des signaux numériques résultant de la conversion, depuis des valeurs dans un domaine temporel en valeurs dans un domaine fréquentiel ; combiner, pour chacun des signaux en bande de base convertis, une pluralité de valeurs dans le domaine fréquentiel sur une base par plage de fréquences prédéterminée afin de convertir ainsi la pluralité de valeurs dans le domaine fréquentiel en des valeurs d'un nombre inférieur à celui de la pluralité de valeurs dans le domaine fréquentiel ; pour estimer une distribution grossière de réflectance dans la zone d'observation, en utilisant le plus petit nombre de valeurs ; et pour estimer une distribution de réflectance par rapport à la zone d' observation, en utilisant la distribution grossière de réflectance comme une valeur initiale d'un traitement d'estimation itératif, la distribution de réflectance étant plus précise que la distribution grossière de réflectance.

2. Dispositif d'analyse de signaux selon la revendication 1, dans lequel
l'unité de traitement de réception (111c) estime la distribution grossière de réflectance, en utilisant des informations obtenues par une caméra (131) photographiant la zone d'observation.

3. Le dispositif d'analyse de signal selon la revendication 1 ou 2,
dans lequel lors de la combinaison des valeurs dans le domaine fréquentiel, l' unité de traitement de réception (111) supprime une plage ne comprenant aucune valeur significative dans le domaine fréquentiel.

4. Le dispositif d'analyse de signal selon l'une quelconque des revendications 1 à 3, dans lequel
les signaux chirp sont des signaux chirp continus.

5. Le dispositif d'analyse de signal selon l'une quelconque des revendications 1 à 3, dans lequel
les signaux chirp sont des signaux chirp par étapes.

6. Le dispositif d'analyse de signal selon l'une quelconque des revendications 1 à 3, dans lequel
les signaux chirp sont des signaux à sauts de fréquence.

7. Le dispositif d'analyse de signal selon l'une quelconque des revendications 1 à 6, comprenant :
une unité de commande (101) pour commander la génération des signaux chirp, dans lequel
l'unité de commande distribue les signaux chirp à l' unité de transmission et à l'unité de réception en commandant le fonctionnement d'un oscillateur (102) qui génère les signaux chirp.

8. Le dispositif d'analyse de signal selon l'une quelconque des revendications 1 à 6, comprenant :
une unité de commande (101b) pour commander la génération des signaux chirp, dans lequel
l'unité de commande distribue les signaux chirp à l'unité de transmission et à l'unité de réception en commandant le fonctionnement d'un convertisseur numérique-vers-analogique qui génère les signaux chirp.

9. Le dispositif d'analyse de signal selon l'une quelconque des revendications 1 à 8, dans lequel
l'unité de traitement de réception (111) effectue une estimation grossière plus fréquemment qu'une estimation fine, et lorsque l'unité de traitement de réception détermine qu'un objet cible d'observation est présent à un emplacement approprié pour l'observation dans la zone d'observation sur la base de la distribution grossière de réflectance estimée par l'estimation grossière, l'unité de traitement de réception effectue l'estimation fine, l'estimation grossière estimant la distribution grossière de réflectance, l'estimation fine estimant une distribution de réflectance plus précise que la distribution grossière de réflectance.

10. Un circuit de commande inclus dans un dispositif d'analyse de signal (100) pour commander le dispositif d'analyse de signal (100), dans lequel le circuit de commande inclut un processeur (91) et une mémoire (92), la mémoire stockant un programme qui, lorsqu'il est lu et exécuté par le processeur, amène le dispositif d'analyse de signal à :
moduler une pluralité de signaux chirp synchronisés les uns avec les autres, et transmettre les signaux modulés depuis une pluralité d'antennes de transmission (106) vers une zone d'observation (107) ;
recevoir, avec une pluralité d'antennes de réception (108), des signaux transmis et passés à travers la zone d'observation, mélanger les signaux chirp avec des signaux de réception reçus avec la pluralité d'antennes de réception pour générer une pluralité de signaux en bande de base, un pour chaque antenne de réception, et convertir chaque signal parmi la pluralité de signaux en bande de base de signaux analogiques en signaux numériques ; et
convertir chaque signal parmi la pluralité de signaux en bande de base qui sont des signaux numériques résultant de la conversion, de valeurs dans un domaine temporel en valeurs dans un domaine fréquentiel, combiner, pour chacun des signaux en bande de base convertis, une pluralité de valeurs dans le domaine fréquentiel sur une base par plage de fréquences prédéterminée pour convertir ainsi la pluralité de valeurs dans le domaine fréquentiel en des valeurs plus petites en nombre que la pluralité de valeurs dans le domaine fréquentiel, estimer une distribution grossière de réflectance dans la zone d'observation, en utilisant le plus petit nombre de valeurs, et estimer une distribution de réflectance par rapport à la zone d'observation, en utilisant la distribution grossière de réflectance comme une valeur initiale du traitement d'estimation itérative, la distribution de réflectance étant plus précise que la distribution grossière de réflectance.

11. Un support de stockage inclus dans un dispositif d'analyse de signal (100), dans lequel
le support de stockage stockant un programme qui, lorsqu'exécuté par un processeur, amène le dispositif d'analyse de signal à :
moduler une pluralité de signaux chirp synchronisés les uns avec les autres, et transmettre les signaux modulés depuis une pluralité d'antennes de transmission (106) vers une zone d'observation (107) ;
recevoir, avec une pluralité d'antennes de réception (108), des signaux transmis et passés à travers la zone d'observation, mélanger les signaux chirp avec des signaux de réception reçus avec la pluralité d'antennes de réception pour générer une pluralité de signaux en bande de base, un pour chaque antenne de réception, et convertir chaque signal parmi la pluralité de signaux en bande de base de signaux analogiques en signaux numériques ; et
convertir chaque signal parmi la pluralité de signaux en bande de base qui sont des signaux numériques résultant de la conversion, de valeurs dans un domaine temporel en valeurs dans un domaine fréquentiel, combiner, pour chacun des signaux en bande de base convertis, une pluralité de valeurs dans le domaine fréquentiel sur une base par plage de fréquences prédéterminée pour convertir ainsi la pluralité de valeurs dans le domaine fréquentiel en des valeurs plus petites en nombre que la pluralité de valeurs dans le domaine fréquentiel, estimer une distribution grossière de réflectance dans la zone d'observation, en utilisant le plus petit nombre de valeurs, et estimer une distribution de réflectance par rapport à la zone d'observation, en utilisant la distribution grossière de réflectance comme une valeur initiale du traitement d'estimation itérative, la distribution de réflectance étant plus précise que la distribution grossière de réflectance.

12. Procédé d'analyse de signal destiné à être utilisé dans un dispositif d'analyse de signal (100), le procédé d'analyse de signal comprenant :
une première étape dans laquelle une unité de transmission (113) module une pluralité de signaux chirp synchronisés les uns avec les autres, et transmet les signaux modulés depuis une pluralité d'antennes de transmission (106) vers une zone d'observation (107) ;
une deuxième étape dans laquelle une unité de réception (114) reçoit, avec une pluralité d'antennes de réception (108), des signaux transmis depuis l'unité de transmission et passés à travers la zone d'observation, mélange les signaux chirp avec des signaux de réception reçus avec la pluralité d'antennes de réception pour générer une pluralité de signaux en bande de base, un pour chaque antenne de réception, et convertit chacun de la pluralité de signaux en bande de base de signaux analogiques en signaux numériques ; et
une troisième étape dans laquelle une unité de traitement de réception (111) convertit chacun de la pluralité de signaux en bande de base qui sont des signaux numériques résultant de la conversion, de valeurs dans un domaine temporel en valeurs dans un domaine fréquentiel, combine, pour chacun des signaux en bande de base convertis, une pluralité de valeurs dans le domaine fréquentiel sur une base par plage de fréquences prédéterminée pour convertir ainsi la pluralité de valeurs dans le domaine fréquentiel en valeurs plus petites en nombre que la pluralité de valeurs dans le domaine fréquentiel, estime une distribution grossière de réflectance dans la zone d'observation, en utilisant le plus petit nombre de, et estime une distribution de réflectance par rapport à la zone d'observation, en utilisant la distribution grossière de réflectance comme valeur initiale du traitement d'estimation itératif, la distribution de réflectance étant plus précise que la distribution grossière de réflectance.
